# EUROPÄISCHE PATENTSCHRIFT

(11) **EP 0 303 019 B1**
(45) Veröffentlichungstag und Bekanntmachung des Hinweises auf die Patenterteilung: **27.01.1993**
(21) Anmeldenummer: 88109501.2
(22) Anmeldetag: 15.06.1988
(51) Int. Cl.: B60T 8/44

(54) **Kraftfahrzeug-Bremsanlage**
Motor vehicle brake installation
Installation de freinage pour véhicules à moteur

(30) Priorität: 10.08.1987 DE 3726598
(43) Veröffentlichungstag der Anmeldung: 15.02.1989
(73) Patentinhaber: ALFRED TEVES GmbH, 60441 Frankfurt (DE)
(72) Erfinder: Ocvirk, Norbert, D-6050 Offenbach (DE); Becker, Horst Peter, D-6000 Frankfurt/Main 90 (DE)
(74) Vertreter: Portwich, Peter

(56) Entgegenhaltungen:
- DE-A- 3 247 497
- DE-A- 3 413 430
- DE-A- 3 601 914
- GB-A- 2 083 581
- GB-A- 2 178 499

## Beschreibung

Die Erfindung betrifft eine Kraftfahrzeug-Bremsanlage mit einem pedalbetätigten pneuamtischen Bremskraftverstärker, einen von diesem beaufschlagten hydraulischen Tandem-Hauptzylinder, an den zwei hydraulische Radbremskreise angeschlossen sind, mit je einem elektromagnetisch betätigten, normalerweise offenen Schließventil in jeder Bremsleitung von dem Hauptzylinder zu einem oder mehreren Radbremszylindern, mit je einem elektromagnetisch betätigten, normalerweise geschlossenen Öffnungsventil in jeweils einer Rücklaufleitung von dem einen oder den mehreren Radbremszylindern zum Rücklaufbehälter, mit Zentralventilen in dem Primär- und Sekundärhauptzylinderkolben des Tandem-Hauptzylinders, welche in der zurückgezogenen Ruhelage der Kolben einen axialen Durchlaß von den Druckräumen der Hauptzylinderkolben zu den an den Rücklaufbehälter angeschlossenen Nachlaufräumen der Hauptzylinderkolben durch die Hauptzylinderkolben hindurch freigeben, welche jedoch bei mehr oder weniger vorgeschobenen Hauptzylinderkolben geschlossen sind, und mit einer motorbetätigten hydraulischen Pumpe für jeden Bremskreis, welche druckseitig vorzugsweise über je ein Rückschlagventil an die vom Hauptzylinder zu den Schließventilen führenden Bremsleitungen angeschlossen sind und saugseitig mit einem Rücklaufbehälter verbunden sind, wobei auf einen Bremsschlupf einzelner Fahrzeugräder ansprechende Radsensoren an eine Bremsschlupfsteuerschaltung angeschlossen sind, welche beim Auftreten eines Bremsschlupfes die Pumpen einschaltet und die Öffnungs- und Schließventile abwechselnd so schaltet, daß dem Bremsschlupf entgegengewirkt wird.

Bei bekannten Kraftfahrzeug-Bremsanlagen dieser Art (DE-OS 36 35 846, DE-OS 36 41 712) sind die beiden hydraulischen Hilfsdruck-Pumpen an einen besonders für sie vorgesehenen Rücklaufbehälter angeschlossen, der über eine Überlaufwand mit den Rücklaufbehältern des Hauptzylinders in Verbindung steht. Auf der Saugseite der beiden Pumpen und auch im Rücklaufzweig von den Öffnungsventilen ist bei diesen bekannten Bremsanlagen eine echte Zweigleisigkeit nicht gegeben.

Das Ziel vorliegenden Erfindung besteht somit darin eine Kraftfahrzeug-Bremsanlage der eingangs genannten Gattung zu schaffen, bei der durchgehend die Zweigleisigkeit gewährleistet ist und ein zusätzlicher Rücklaufbehälter für die Hilfsdruck-Pumpen nicht erforderlich ist.

Zur Lösung dieser Aufgabe liegt die Erfindung vor, daß die Saugseiten der Pumpen über je eine hydraulische Leitung an den Nachlaufraum des der betreffenden Pumpe zugeordneten Hauptzylinderkolbens angeschlossen sind.

Auf diese Weise sind die beiden hydraulischen Pumpen für den Aufbau eines Hilfsdrucks bei einer Bremsschlupfregelung auch auf der Saugseite vollständig entkoppelt, wobei in vorteilhafter Weise durch Anschluß an die zugeordneten Nachlaufräume des Tandem-Hauptzylinders ein besonderer Rücklaufbehälter für die beiden Pumpen entbehrlich ist.

Um auch beim Rücklauf von den Radbremszylindern die Unabhängigkeit der beiden Bremskreise zu gewährleisten, ist nach einer vorteilhaften Weiterbildung der Erfindung vorgesehen, daß auch die Öffnungsventile über die Rücklaufleitungen an den Nachlaufraum des den betreffenden Radbremszylinder zugeordneten Hauptzylinderkolbens angeschlossen sind.

Der Leitungsaufwand kann herabgesetzt werden, wenn nach einer vorteilhaften Weiterbildung der Erfindung daß die Rücklaufleitungen vor dem Anschluß an die Nachlaufräume mit den Saug-Leitungen der Pumpen zusammengeführt sind.

Die erfindungsgemäße Bremsanlage läßt sich ohne weiteres auch mit einer Brems-Antriebs-Schlupfsteuerschaltung zur zusätzlichen Antriebsschlupfregelung für die angetriebenen Fahrzeugräder versehen, wobei erfindungsgemäß vorgesehen wird, daß in die Bremsleitung vom Tandem-Hauptzylinder zu den Radbremszylindern der angetriebenen Räder (HR, HL) normalerweise offene, elektromagnetisch betätigte Schließventile eingeschaltet sind, welche von der Brems-Antriebs-Schlupfsteuerschaltung derart angesteuert sind, daß sie schließen, sobald ein Antriebsschlupf festgestellt wird, so daß der Tandem-Hauptzylinder von den Radbremszylindern der angetriebenen Räder abgetrennt ist, und daß die Brems-Antriebs-Schlupfsteuerschaltung gleichzeitig wenigstens die auf die Radbremszylinder der angetriebenen Räder einwirkende Pumpe einschaltet, welche dann über die von der Brems-Antriebs-Schlupfsteuerschaltung geeignet geschalteten Schließventilen derart auf die Radbremszylinder der angetriebenen Räder einwirkt, daß der Antriebsschlupf gerade beseitigt wird.

Die Erfindung wird im folgenden beispielsweise anhand der Zeichnung beschrieben; in dieser zeigt
- Fig. 1: eine blockschaltbildartige Darstellung einer ersten Ausführungsform einer erfindungsgemäßen Kraftfahrzeug-Bremsanlage, wobei der Tandem-Hauptzylinder und der pneumatische Bremskraftverstärker in teilweise geschnittener Seitenansicht wiedergegeben sind,
- Fig. 2: eine ähnliche Ansicht einer etwas abgewandelten Ausführungsform,
- Fig. 3: eine ähnliche Ansicht einer Ausführungsform mit zusätzlicher Antriebsschlupfregelung der angetriebenen Fahrzeugräder und
- Fig. 4: eine ähnliche Ansicht einer gegenüber Fig. 3 dahingehend abgewandelten Ausführungsform, daß die Antriebsschlupfregelung bei einem Diagonalbremskreis verwirktlicht wird.

In allen Figuren bezeichnen gleiche Bezugszahlen entsprechende Bauelemente.

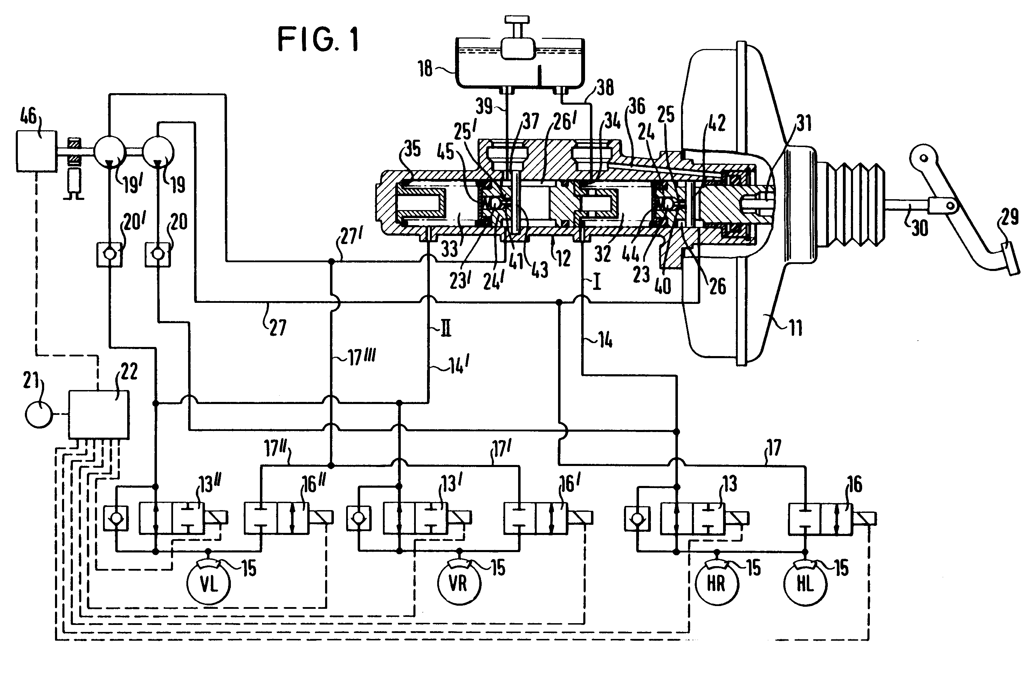

Nach Fig. 1 kann mittels eines Bremspedals 29 die Eingangsbetätigungsstange 30 eines pneumatischen Bremskraftverstärkers 11 betätigt werden. An die Ausgangsseite des pneumatischen Bremskraftverstärkers 11 ist ein hydraulischer Tandem-Hauptzylinder 12 angeflanscht, auf dessen Primär-Hauptzylinderkolben 24 der Ausgangsstößel 31 des pneumatischen Bremskraftverstärkers 11 axial einwirkt. Im Druckraum 32 des Primär-Hauptzylinderkolbens 24 ist eine Schraubendruckfeder 34 angeordnet, die sich axial bis zum am Ende des Druckraums 32 axial verschiebbar im Tandem-Hauptzylinder 12 angeordneten Sekundär-Hauptzylinderkolben 24′ erstreckt, welcher seinerseits durch eine Schraubendruckfeder 35, die am Boden des Tandem-Hauptzylinders 12 abgestützt ist, in Richtung des Bremspedals 29 federnd vorgespannt ist.

Hinter dem abdichtenden Teil jedes Hauptzylinderkolbens 24′ befinden sich ringförmige Nachlaufräume 26 bzw. 26′, welche über aus dem Tandem-Hauptzylinder 12 seitlich herausführende Bohrungen 36 bzw. 37 und hydraulische Leitung 38 bzw. 39 mit einem Rücklaufbehälter 18 verbunden sind.

Jeder Hauptzylinderkolben 24, 24′ weist in der Mitte einen axialen Durchlaß 25, 25′ auf, der durch jeweils ein Zentralventil 23 bzw. 23′ verschließbar ist. Jedes Zentralventil 23, 23′ weist eine Kugel auf, die mittels eines Stößels 40 bzw. 41 in der in den Zeichnungen dargestellten Ruhelage durch Anstoßen an einen hauptzylinderfesten Querbolzen 42 bzw. 43 von ihrem Sitz abgehoben wird, so daß der axiale Durchlaß 25, 25′ freigegeben wird.

Werden die Hauptzylinderkolben 24, 24′ in der Zeichnung nach links, d.h. unter Zusammendrückung der Schraubendruckfedern 34, 35 verschoben, so heben die Stößel 40, 41 von den Querbolzen 42, 43 ab und eine schematisch angedeutete Rückstellfeder 44 bzw. 45 bewegt die Kugel der Zentralventile 23, 23′ in ihre Schließstellung, so daß der axiale Durchlaß 25, 25′ abgesperrt ist.

An die Druckräume 32 bzw. 33 der beiden Hauptzylinderkolben 24, 24′ sind die beiden getrennten Radbremskreise I und II angeschlossen. Vom Druckraum 32 führt eine Bremsleitung 14 über ein von einem Rückschlagventil überbrücktes elektromagnetisches Schließventil 13 zu den Hinterrad-Radbremszylindern 15. Die Hinterrad-Radbremszylinder 15 sind außerdem an ein elektromagnetisch betätigtes Öffnungsventil 16 angeschlossen, das über eine Rücklaufleitung 17 an eine zum Nachlaufraum 26 führende Leitung 27 angeschlossen ist.

Der Druckraum 33 ist über Bremsleitung 14′ mit den beiden jeweils durch ein Rückschlagventil überbrückten Schließventilen 13′, 13˝ der Radbremszylinder 15 des rechten und des linken Vorderrades verbunden. Weiter sind diese beiden Radbremszylinder 15 über jeweils ein ebenfalls elektromagnetisch betätigtes Öffnungsventil 16′ bzw 16˝, Rücklaufleitungen 17′, 17˝, eine zusammengeführt Rücklaufleitung 17‴ und eine Leitung 27′ an den Nachlaufraum 26′ des Hauptzylinderkolbens 24′ angelegt.

Die Leitungen 27, 27′ führen außerdem zu den Saugseiten zweier hydraulischer Pumpen 19, 19′ welche gemeinsam durch einen Elektromotor 46 antriebbar sind. Die Druckseiten der Pumpen 19, 19′ sind über Rückschlagventile 20 bzw. 20′ an die Bremsleitungen 14 bzw. 14′ angeschlossen.

Sowohl die elektromagnetisch betätigten Ventile 13, 13′, 13˝, 16, 16′, 16˝ als auch der Motor 46 sind an eine Bremsschlupfsteuerschaltung 22 angeschlossen, die von nur schematisch angedeuteten Radsensoren 21 angesteuert ist.

Die beschriebene Kraftfahrzeug-Bremsanlage arbeitet wie folgt:
Bei einer normalen Bremsung wird das Bremspedal 29 niedergetreten, worauf die beiden Hauptkolben 24, 24′ in Fig. 1 nach links bewegt werden, so daß sich in den Bremskreisen I und II ein Druck aufbaut, nach dem Beginn der Verschiebung die Zentralventile 23, 23′ geschlossen wurden.

Tritt jetzt an einem der Fahrzeugräder ein Bremsschlupf auf, so meldet dies der dem Rad zugeordnete Radsensor 21 an die Bremsschlupfsteuerschaltung 22, welche zunächst den Motor 46 einschaltet, so daß sich auf der Druckseite der Pumpen 19, 19′ ein dem Bremsdruck entsprechender Druck aufbaut. Gleichzeitig beginnt das dem Bremsschlupf entgegenwirkende Arbeitsspiel der Ventile 13, 16 oder 13′, 16′ oder 13˝, 16˝. Die Pumpen 19, 19′ sind in erster Linie dazu bestimmt, daß bei einer Bremsschlupfregelung durch das Spiel der Ventile verlorengehende Volumen an Bremsflüssigkeit zu ersetzen. Über die Bremsleitungen 14, 14′ wird jedoch der Druck auch in die Druckräume 32, 33 weitergeleitet. Dadurch bleibt das Fußpedal 29 aufgrund entsprechender Wahl des Druckes am Ausgang der Pumpen 19, 19′ in derjenigen Stellung stehen, die es gerade beim Beginn der Bremsschlupfregelung eingenommen hat.

Sobald der Bremsschlupf beseitigt ist, schaltet die Bremsschlupfsteuerschaltung den Motor 46 wieder ab, so daß der normale Bremsvorgang fortgesetzt wird.

Sollte der Fahrer während einer Bremsschlupfregelung das Bremspedal 29 plötzlich loslassen, so werden die Hauptkolben 24, 24′ augenblicklich in ihre Ruhelage überführt, wobei die Zentralventile 23, 23′ öffnen. Dadurch werden die beiden Bremskreise I, II in der erwünschten Weise sofort druckentlastet und die Bremsung der einzelnen Räder auch dann unterbunden, wenn die Pumpen 19, 19′ noch kurz nachlaufen sollten.

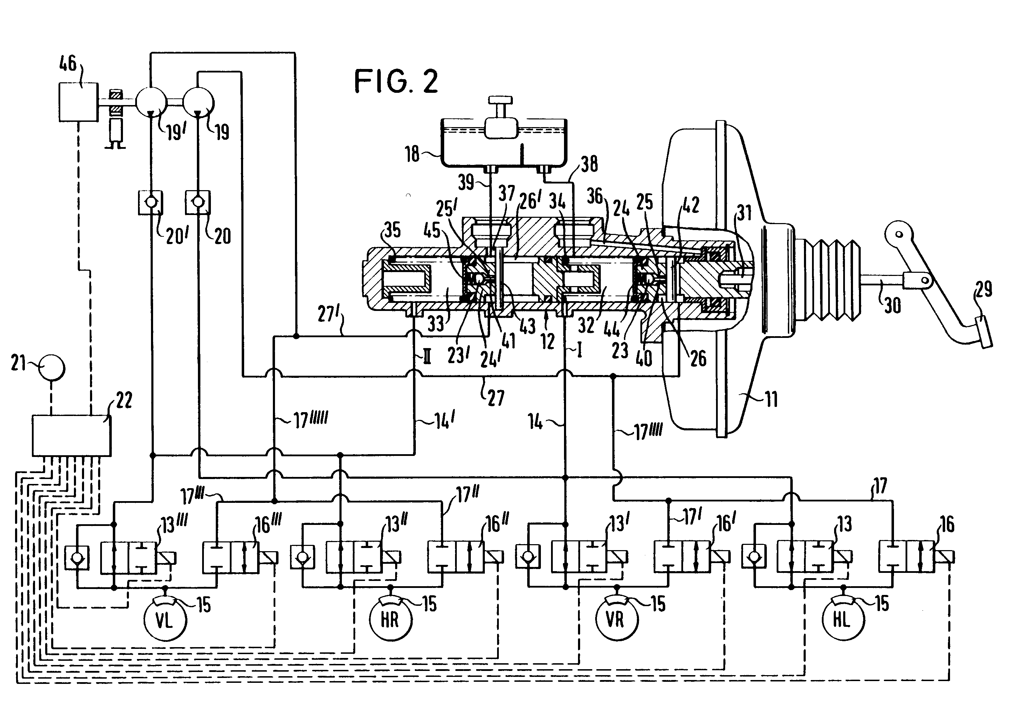

Während bei der Ausführungsform nach Fig. 1 die beiden Hinterradbremszylinder 15 im Bremskreis I liegen und jeweils gemeinsame Schließ- und Öffnungsventile 13 bzw. 16 aufweisen, während die beiden Vorderradbremszylinder 15 jeweils eigene Schließventile 13′, 13˝ bzw. Öffnungsventile 16, 16˝ aufweisen, ist in Fig. 2 ein Ausführungsbeispiel mit zwei Diagonalbremskreisen wiedergegeben. Die Bremsleitung 14 führt zu den Schließventilen 13, 13′ des hinteren linken und des vorderen rechten Radbremszylinders 15, während die den beiden Radbremszylindern 15 zugeordneten Öffnungsventile 16, 16′ über Rücklaufleitungen 17, 17′ zu einer gemeinsamen Rücklaufleitung 17˝˝ geführt sind, die an die Saug-Leitung 27 der Pumpe 19 angeschlossen ist.

Die Radbremszylinder 15 des hinteren rechten und des vorderen linken Rades sind über Schließventile 13′, 13‴ an die Bremsleitung 14′ des Bremskreises II angeschlossen, während die Öffnungsventile 16˝, 16‴ der beiden Radbremszylinder 15 über Rücklaufeitungen 17˝, 17‴ über eine gemeinsame Rück-laufleitung 17˝˝′ zur Saug-Leitung 27′ der Pumpe 19′ geführt sind.

Abgesehen von der Schaltung der Radbremszylinder ist die Funktion des Ausführungsbeispiels nach Fig. 2 gleich der Betriebsweise der Ausführungsform nach Fig. 1.

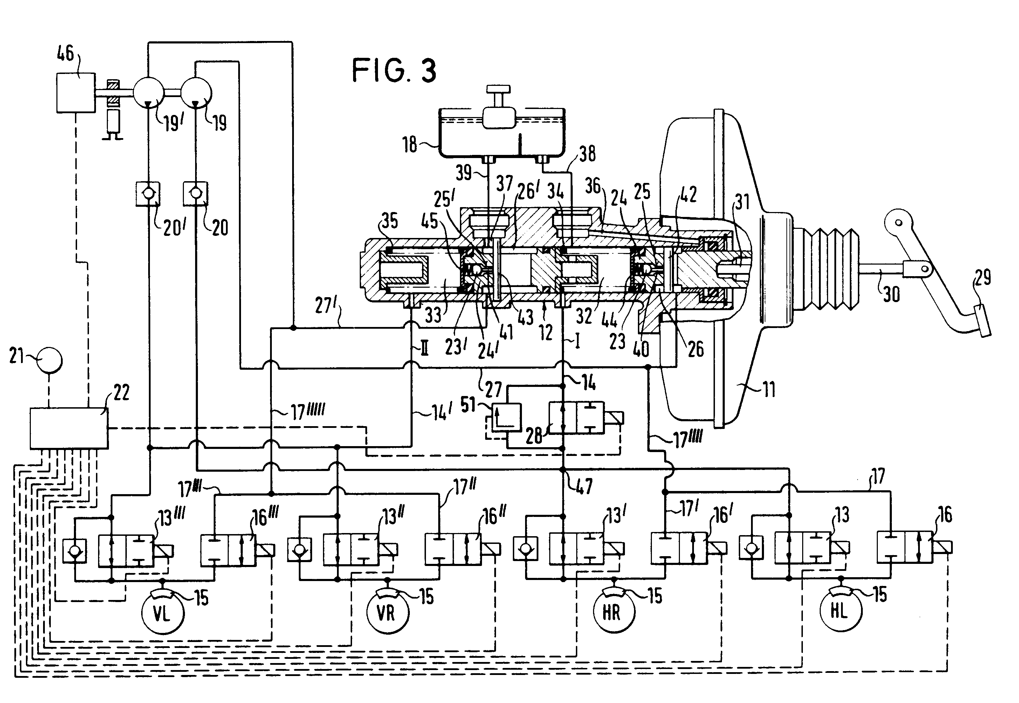

Die Schaltung der Radbremszylinder nach Fig. 3 entspricht weitgehend der Anordnung nach Fig. 1, wobei jedoch jeden Hinterrad-Bremszylinder ein eigenes Schließventil 13, 13′ und ein eigenes Öffnungsventil 16 bzw. 16′ zugeordnet ist. Die Vorderradbremszylinder besitzen Schließventile 13˝, 13‴ und Öffnungsventile 16˝, 16‴.

Zusätzlich zur Ausführungsform nach Fig. 1 ist jedoch in die Bremsleitung 14 vor dem Anschlußpunkt der Druckseite der Pumpe 19 ein elektromagnetisch betätigtes Schließventil 28 eingeschaltet, welches durch eine Brems-Antriebs-Schlupfsteuerschaltung 22′ angesteuert ist, welche ähnlich wie die Bremsschlupfsteuerschaltung 22 nach Fig. 1 und 2 auch den Motor 46 und die übrigen Schließ- und Öffnungsventile beaufschlagt.

Parallel zu dem Schließventil 28 ist in die Bremsleitung 14 ein Druckbegrenzungsventil 51 eingeschaltet, das den maximalen von der hydraulischen Pumpe 19 gelieferten Druck begrenzt und damit ein Abwürgen der Pumpe 19 bei geschlossenem Schließventil 28 verhindert.

Durch das zusätzliche Schließventil 28 ist auch die Verwendung der erfindungsgemäßen Bremsanlage als Antriebs-Schlupf-regelvorrichtung möglich.

Sobald einer der Radsensoren 21 an einem der angetriebenen Hinterräder HR oder HL einen Antriebsschlupf feststellt, wird sofort das Schließventil 28 in die Schließstellung überführt, wodurch der Tandem-Hauptzylinder 12 von den Hinterrad-Radbremszylindern 15 abgetrennt wird. Gleichzeitig laufen die Pumpen 19, 19′ an. Es könnte aber auch vorgesehen sein, daß lediglich die Pumpe 19 in Drehung versetzt wird.

Durch ein geeignetes Spiel der Ventile 13, 13′ und 16, 16′ kann nunmehr die Pumpe 19 dafür sorgen, daß die Hinterräder HR bzw. HL gerade so gebremst werden, daß der Antriebsschlupf beseitigt wird.

Das Mitlaufen der weiteren Pumpe 19′ stört nicht, weil ihre Druckseite über die Bremsleitung 14′ und den bei nichterfolgender Bremsung offenen axialen Durchlaß 25′ an den Rücklaufbehälter 18 angeschlossen ist. Auf diese Weise braucht eine Bremsung der Vorderräder VL bzw. VR nicht befürchtet zu werden. Wie gesagt könnte aber auch vorgesehen werden, daß die Pumpe 19′ bei einer Antriebsschlupfregelung gar nicht angetrieben wird.

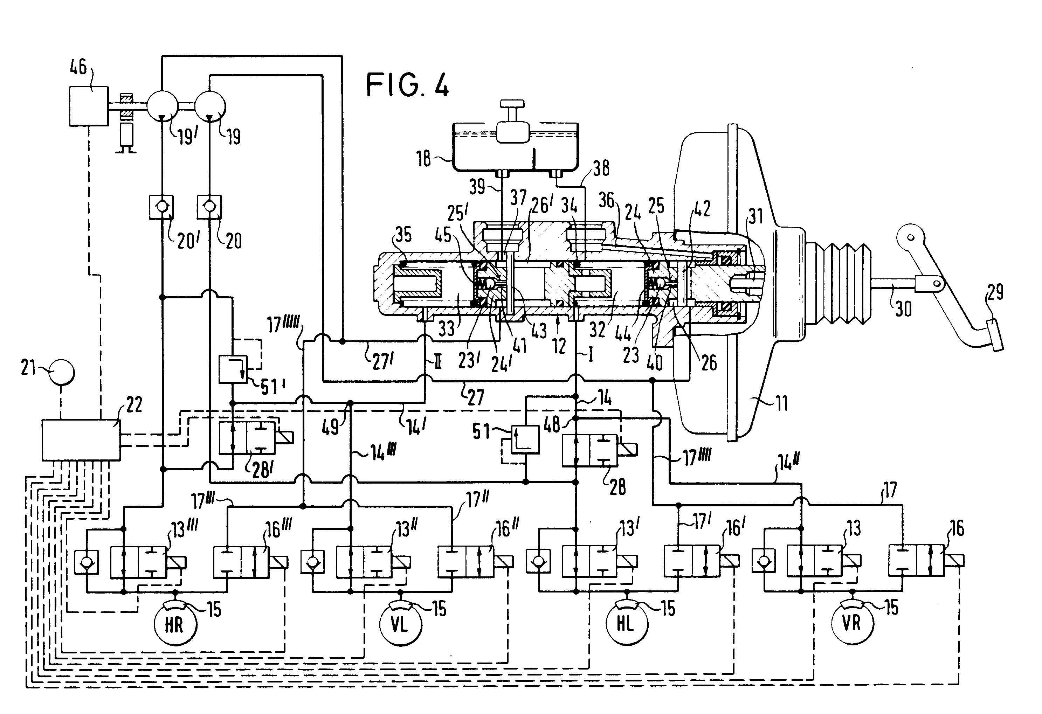

Die Ausführungsform nach Fig. 4 arbeitet wieder wie die nach Fig. 2 mit zwei Diagonalbremskreisen. In diesem Fall müssen zwei Schließventile 28, 28′ vorgesehen werden, um eine Antriebsschlupfregelung zu verwirklichen. Dabei ist parallel zu den beiden Schließventilen 28, 28′ je ein Druckbegrenzungsventil 51, 51′ geschaltet, das den von den Pumpen 19, 19′ gelieferten Druck begrenzt, so daß ein Abwürgen der Pumpen 19, 19′ während der Druckhalte- und Druckabbauphasen bei der Antriebsschlupfregelung verhindert wird. Das Schließventil 28 befindet sich wieder in der Bremsleitung 14, jedoch erst hinter dem Anschlußpunkt 48, wo die Bremsleitung 14˝ für das rechte Vorderrad VR abzweigt. Entsprechend ist das zweite Schließventil 28′ in die Bremsleitung 14′ erst nach dem Anschlußpunkt 49 für die Bremsleitung 14‴ zum linken Vorderrad VL eingeschaltet.

Die beiden elektromagnetisch betätigten Schließventile 28, 28′ werden wieder von der Brems-Antriebs-Schlupfsteuerschaltung 22′ analog wie beim Ausführungsbeispiels nach Fig. 3 geschaltet. Bei der Antriebsschlupfregelung steuert die Brems-Antriebs-Schlupfsteuerschaltung 22′ lediglich die Ventile 13, 16 bzw. 13‴, 26‴ der Radbremszylinder 15 der angetriebenen Hinterräder in der den Antriebsschlupf beseitigenden Weise an.

## Patentansprüche

1. Kraftfahrzeug-Bremsanlage mit einem pedalbetätigten (29) pneumatischen Bremskraftverstärker (11), einem von diesem beaufschlagten hydraulischen Tandem-Hauptzylinder (12), an den zwei hydraulische Radbremskreise (I, II) angeschlossen sind, mit je einem elektromagnetisch betätigten, normalerweise offenen Schließventil (13) in jeder Bremsleitung (14) von dem Hauptzylinder (12) zu einem oder mehreren Radbremszylindern (15), mit je einem elektromagnetisch betätigten, normalerweise geschlossenen Öffnungsventil (16) in jeweils einer Rücklaufleitung (17) von dem einen oder den mehreren Radbremszylindern (15) zum Rücklaufbehälter (18), mit Zentralventilen (23) in dem Primär- und Sekundärhauptzylinderkolben (24) des Tandem-Hauptzylinders (12), welche in der zurückgezogenen Ruhelage der Kolben (24) einen axialen Durchlaß (25) von den Druckräumen der Hauptzylinderkolben (24) zu den an den Rücklaufbehälter (18) angeschlossenen Nachlaufräumen (26) der Hauptzylinderkolben (24) durch die Hauptzylinderkolben (24) hindurch freigeben, welche jedoch bei mehr oder weniger vorgeschobenen Hauptzylinderkolben (24) geschlossen sind, und mit einer motorbetätigten hydraulischen Pumpe (19) für jeden Bremskreis (I, II), welche druckseitig vorzugsweise über je ein Rückschlagventil (20) an die vom Hauptzylinder (12) zu den Schließventilen (13) führenden Bremsleitungen (14) angeschlossen sind und saugseitig mit dem Rücklaufbehälter (18) verbunden sind, wobei auf einen Bremsschlupf einzelner Fahrzeugräder ansprechende Radsensoren (21) an eine Bremsschlupfsteuerschaltung (22) angeschlossen sind, welche beim Auftreten eines Bremsschlupfes die Pumpen (19) einschaltet und die Öffnungs- (16) und Schließventile (13) abwechselnd so schaltet, daß dem Bremsschlupf entgegengewirkt wird,
dadurch **gekennzeichnet,**
daß die Saugseiten der Pumpen (19, 19′) über je eine hydraulische Leitung (27, 27′) an den Nachlaufraum (26, 26′) des der betreffenden Pumpe (19, 19′) zugeordneten Hauptzylinderkolbens (24, 24′) direkt angeschlossen sind.

2. Bremsanlage nach Anspruch 1, dadurch **gekennzeichnet,** daß auch die Öffnungsventil (16, 16′, 16˝) über die Rücklaufleitungen (17, 17′, 17˝) an den Nachlaufraum (26, 26′) des den betreffenden Radbremszylinder (15) zugeordneten Hauptzylinderkolbens (24, 24′) angeschlossen sind.

3. Bremsanlage nach Anspruch 2, dadurch **gekennzeichnet,** daß die Rücklaufleitungen (17, 17′, 17˝) vor dem Anschluß an die Nachlaufräume (26, 26′) mit den Saug-Leitungen (27, 27′) der Pumpen (19, 19′) zusammengeführt sind.

4. Bremsanlage nach einem der vorhergehenden Ansprüche mit einer Brems-Antriebs-Schlupfsteuerschaltung zur zusätzlichen Antriebsschlupfregelung für die angetriebenen Fahrzeugräder, dadurch **gekennzeichnet,**
daß in die Bremsleitungen (14, 14′) vom Tandem-Hauptzylinder (12) zu den Radbremszylindern (15) der angetriebenen Räder (HR, HL) normalerweise offene, elektromagnetisch betätigte Schließventile (28, 28′) eingeschaltet sind, welche von der Brems-Antriebs-Schlupfsteuerschaltung (22′) derart angesteuert sind, daß sie schließen, sobald ein Antriebsschlupf festgestellt wird, so daß der Tandem-Hauptzylinder (12) von den Radbremszylindern (15) der angetriebenen Räder abgetrennt ist, und daß die Brems-Antriebs-Schlupfsteuerschaltung (22′) gleichzeitig wenigstens die auf die Radbremszylinder (15) der angetriebenen Räder einwirkende Pumpe (19; 19′) einschaltet, welche dann über die von der Brems-Antriebs-Schlupfsteuerschaltung (22′) geeignet geschalteten Schließventile (13, 13′) derart auf die Radbremszylinder (15) der angetriebenen Räder einwirkt, daß der Antriebsschlupf gerade beseitigt wird.

## Claims

1. A brake system for automotive vehicles comprising a pneumatic brake power booster (11) operated by a pedal (29), a hydraulic tandem master cylinder (12) which is acted upon by said booster and to which two hydraulic wheel brake circuits (I, II) are connected, comprising each one electromagnetically actuated normally open closing valve (13) inserted in each brake line (14) from the master cylinder (12) to one or more of the wheel brake cylinders (15), comprising each one electromagnetically actuated normally closed opening valve (16) inserted in each one return line (17) from one or more of the wheel brake cylinders (15) to the supply reservoir (18), with central valves (23) in the primary and secondary master cylinder pistons (24) of the tandem master cylinder (12) which, in the retracted inactive position of the pistons (24), open an axial passage (25) through the master cylinder pistons (24) from the pressure chambers of the master cylinder pistons (24) to the supply chambers (26) of the master cylinder pistons (24), the said supply chambers communicating with the supply reservoir (18), which central valves, however, are closed in the event of more or less advanced master cylinder pistons (24), and comprising a motor-operated hydraulic pump (19) for each brake circuit (I, II), which pumps, on the pressure side, are connected preferably via each one non-return valve (20) to the brake lines (14) leading from the master cylinder (12) to the closing valves (13) and, on the suction side, are connected with the supply reservoir (18), with wheel sensors (21) responding to brake slip on individual vehicle wheels being coupled to a brake slip control circuitry (22) which, upon the occurrence of brake slip, switches the pumps (19) on and alternately switches the opening valves (16) and closing valves (13) such as to counteract brake slip,
**characterized** in that the suction sides of the pumps (19, 19') are in direct communication via each one hydraulic line (27, 27') with the supply chamber (26, 26') of the master cylinder piston (24, 24') allocated to the respective pump (19, 19').

2. A brake system as claimed in claim 1,
**characterized** in that the opening valves (16, 16', 16"), too, communicate via the return lines (17, 17', 17") with the supply chamber (26, 26') of the master cylinder piston (24, 24') allocated to the respective wheel brake cylinder (15).

3. A brake system as claimed in claim 2,
**characterized** in that the return lines (17, 17', 17") are united with the suction lines (27, 27') of the pumps (19, 19') in front of their connection to the supply chambers (26, 26').

4. A brake system as claimed in any one of the preceding claims with a brake traction slip control circuitry for the additional traction slip control for the driven vehicle wheels,
**characterized** in that normally open electromagnetically operated closing valves (28, 28') are inserted into the brake lines (14, 14') from the tandem master cylinder (12) to the wheel brake cylinders (15) of the driven wheels (HR, HL), the said closing valves being actuated by the brake traction slip control circuitry (22') in such a fashion that they close as soon as traction slip is detected so that the tandem master cylinder (12) is isolated from the wheel brake cylinders (15) of the driven wheels, and in that the brake traction slip control circuitry (22') simultaneously switch on at least that pump (19; 19') which acts upon the wheel brake cylinders (15) of the driven wheels and which will then act upon the wheel brake cylinders (15) of the driven wheels via the closing valves (13, 13'), being suitably switched by the brake traction slip control circuitry (22'), in such a way that traction slip is eliminated.

## Revendications

1. Système de freinage, pour véhicule automobile, comprenant, en premier lieu, un amplificateur pneumatique d'effort de freinage (11), actionné par la pédale (29), et un maître-cylindre hydraulique tandem (12), qui est soumis à l'action de cet amplificateur (11) et auquel sont raccordés deux circuits hydrauliques de freinage de roues (I, II) comprenant, d'une part, une valve de fermeture (13) à actionnement électromagnétique et normalement ouverte, disposée dans chaque conduite de freinage (14) allant du maître-cylindre (12) à un ou plusieurs des cylindres de freins de roues (15), et, d'autre part, une valve d'ouverture (16) à actionnement électromagnétique et normalement fermée, disposée dans chaque conduite de retour (17) allant d'un ou plusieurs cylindres de freins de roues (15) au réservoir de retour (18), en deuxième lieu, des valves centrales (23) qui sont situées dans le piston primaire et le piston secondaire (24) du maître-cylindre tandem (12) et qui, dans la position rétractée de repos de ces pistons (24), libèrent un passage axial (25) qui va, en traversant les pistons de maître-cylindre (24), des chambres de pression de ces pistons de maître-cylindre (24) aux chambres de retour (26) de ces pistons de maître-cylindre qui sont raccordées au réservoir de retour (18), ces valves centrales (23) étant en revanche fermées lorsque les pistons de maître-cylindre (24) sont plus ou moins déplacés vers l'avant, et, en troisième lieu, pour chaque circuit de freinage (I, II), une pompe hydraulique (19) actionnée par un moteur, ces pompes hydrauliques (19) étant, d'une part, de préférence raccordées, du côté du refoulement et par l'intermédiaire d'une valve anti-retour (20) pour chacune, aux conduites de freinage (14) conduisant du maître-cylindre (12) aux valves de fermeture (13) et, d'autre part, reliées, du côté de l'aspiration, au réservoir de retour (18), tandis que les capteurs de roues (21), réagissant à un glissement de freinage de roues individuelles du véhicule sont raccordés à un circuit de commande de glissement de freinage (22) qui, lorsqu'un glissement de freinage apparaît, met les pompes (19) en marche et commute d'une manière intervertie les valves d'ouverture (16) et de fermeture (13) de façon à s'opposer au glissement de freinage, caractérisé en ce que les côtés d'aspiration des pompes (19, 19') sont raccordés directement, par l'intermédiaire d'une conduite hydraulique (27, 27') pour chacun, à la chambre de retour (26, 26') du piston de maître-cylindre (24, 24') associé à la pompe correspondante (19, 19').

2. Système de freinage suivant la revendication 1, caractérisé en ce que les valves d'ouverture (16, 16', 16") sont aussi raccordées, par l'intermédiaire des conduites de retour (17, 17', 17"), à la chambre de retour (26, 26') du piston de maître-cylindre (24, 24') associé au cylindre de frein de roue (15) correspondant.

3. Système de freinage suivant la revendication 2, caractérisé en ce que les conduites de retour (17, 17', 17") sont, en amont du raccordement aux chambres de retour (26, 26'), confondues avec les conduites d'aspiration (27, 27') des pompes (19, 19').

4. Système de freinage suivant l'une des revendications précédentes, comportant un circuit de commande de glissement de freinage et de traction servant à une régulation supplémentaire du glissement de traction pour les roues motrices du véhicule automobile, caractérisé en ce que des valves de fermeture (28, 28'), à actionnement électromagnétique et normalement ouvertes, sont interposées dans les conduites de freinage (14, 14') allant du maître-cylindre tandem (12) aux cylindres de freins de roues (15) des roues motrices (HR, HL), ces valves de fermeture (28, 28') étant commandées par le circuit de commande de glissement de freinage et de traction (22') de façon telle qu'elles se ferment dès qu'un glissement de traction est détecté, de sorte que le maître-cylindre tandem (12) est isolé des cylindres de freins de roues (15) des roues motrices, et que le circuit de commande de glissement de freinage et de traction (22') met en même temps en marche au moins la pompe (19 ; 19') agissant sur les cylindres de freins de roues (15) des roues motrices, ces pompes (19, 19') agissant alors sur les cylindres de freins de roues (15) des roues motrices, par l'intermédiaire des valves de fermeture (13, 13') placées dans la position appropriée par le circuit de commande de glissement de freinage et de traction (22'), de façon telle que le glissement de traction est bien éliminé.
